# FASCICULE DE BREVET EUROPEEN

(11) **EP 1 997 659 B1**
(45) Date de publication et mention de la délivrance du brevet: **07.04.2010**
(21) Numéro de dépôt: 08155402.4
(22) Date de dépôt: 29.04.2008
(51) Int. Cl.: B60J 5/10, E05D 11/00

(54) **Procédé de montage d'un ouvrant arrière motorisé ou non d'un véhicule automobile**
Montageverfahren einer motorisierten oder nicht motorisierten Heckklappe eines Kraftfahrzeugs
Method of installing a rear window, motorised or not, of an automobile vehicle

(30) Priorité: 01.06.2007 FR 0755416
(43) Date de publication de la demande: 03.12.2008
(73) Titulaire: Peugeot Citroën Automobiles SA, 78943 Vélizy-Villacoublay Cedex (FR)
(72) Inventeur: Mariet, Jean-Michel, 92700 Colombes (FR); Kondyra, Emmanuel, 92140 Clamart (FR)
(74) Mandataire: Allain, Laurent

(56) Documents cités:
- EP-A- 1 094 184
- GB-A- 847 306

## Description

La présente invention concerne un procédé de montage d'un ouvrant arrière d'un véhicule automobile, ledit ouvrant étant monté de façon articulée à la caisse du véhicule automobile au moyen d'au moins un charnon fixe fixé à la caisse du véhicule automobile et d'un charnon mobile articulé au charnon fixe et fixé à l'ouvrant arrière, l'ouvrant arrière étant mobile entre une position d'ouverture et une position de fermeture, le passage d'une position à l'autre étant susceptible d'être réalisé d'une façon manuelle ou d'une façon motorisée par le montage de moyens de motorisation sur ledit ouvrant arrière, l'ouvrant arrière devant être fixé au charnon mobile à une hauteur de fixation plus importante dans le cas d'un ouvrant motorisé.

Le brevet EP1094184 se rapporte à la fixation d'un ouvrant arrière sur un véhicule, cet ouvrant étant monté de façon articulée à la caisse du véhicule, au moyen d'un charnon fixe, arrimé à la caisse, et d'un charnon mobile articulé au charnon fixe, et fixé à l'ouvrant.

L'ouvrant arrière d'un véhicule automobile, c'est-à-dire le volet d'un hayon ou d'un coffre de véhicule automobile, est mobile entre une position d'ouverture permettant d'accéder au volume arrière du véhicule et une position de fermeture permettant de fermer ce volume arrière. Selon les modèles de véhicules automobiles, le passage d'une position à l'autre se fait de façon motorisée ou de façon manuelle.

Pour une ouverture motorisée, l'ouvrant arrière est équipé de moyens de motorisation tels qu'un moteur et des vérins motorisés, tandis que pour une ouverture manuelle un simple système d'équilibreurs est monté sur l'ouvrant arrière.

Le poids des moyens motorisés et la force de poussée des vérins entraînent une mise en contrainte de l'ouvrant arrière motorisé plus importante qui impose que l'ouvrant arrière motorisé soit monté plus haut par rapport à la caisse du véhicule automobile que l'ouvrant arrière manuel.

A ce jour, les solutions envisagées pour résoudre ce problème sont d'avoir des ouvrants différents s'ils sont motorisés afin de rattraper l'écart de hauteur par rapport aux ouvrants manuels, ce qui oblige à prévoir deux types d'ouvrant pour les différents modèles de véhicule automobile. Une autre solution consiste à retoucher chaque véhicule après le montage afin d'adapter la hauteur de l'ouvrant selon qu'il est motorisé ou non, ce qui entraîne des complications du procédé de montage et une perte de temps considérable. De plus, dans le cas d'un ouvrant motorisé, celui-ci et les pièces sur lesquelles il est fixé doivent être rigidifiés.

L'invention vise à pallier ces inconvénients en proposant un procédé de montage d'un ouvrant arrière permettant de réaliser une grande partie du montage sans distinction entre un ouvrant motorisé et un ouvrant manuel.

A cet effet, l'invention concerne un procédé du type mentionné ci-dessus comprenant les étapes suivantes :
- fixer l'ouvrant arrière au charnon mobile, en interposant une pièce de montage entre l'ouvrant arrière et le charnon mobile, ladite pièce de montage présentant une épaisseur sensiblement égale à la différence de hauteur de fixation au charnon mobile entre un ouvrant motorisé et un ouvrant non motorisé,
- fixer le charnon fixe, articulé au charnon mobile, à la caisse du véhicule automobile,
- faire subir à la caisse au moins une opération de traitement,
- faire le choix d'équiper le véhicule automobile d'un ouvrant arrière motorisé ou d'un ouvrant arrière non motorisé,
- si le choix d'un ouvrant motorisé a été fait, retirer la pièce de montage d'entre l'ouvrant arrière et le charnon mobile et monter les moyens de motorisation sur ledit ouvrant arrière.

Ainsi, grâce au maintien ou au retrait de la pièce de montage, le choix entre un ouvrant motorisé ou un ouvrant manuel n'est réalisé qu'à la fin du procédé de montage. Un seul type d'ouvrant peut être prévu pour les différents modèles de véhicule automobile lors du montage, puis le montage des moyens motorisés sur l'ouvrant permet de rendre l'ouvrant motorisé à la fin du montage. De plus, il n'est plus nécessaire de retoucher chaque véhicule automobile après le montage pour adapter l'ouvrant arrière. Enfin, il n'est pas nécessaire de rigidifier l'ouvrant arrière ou les pièces auxquelles il est fixé en cas de choix d'un ouvrant motorisé.

Selon une autre caractéristique du procédé, l'opération de traitement est une opération de ferrage de la caisse.

La pièce de montage est telle qu'elle présente une épaisseur sensiblement égale à la différence de hauteur de fixation au charnon mobile entre un ouvrant motorisé et un ouvrant non motorisé.

Une telle pièce de montage est particulièrement simple et économique à réaliser, ce qui rend le procédé de montage peu coûteux par rapport à un procédé dans lequel on prévoit deux types d'ouvrant arrière adaptés respectivement à une utilisation manuelle et à une utilisation motorisée.

Selon d'autres caractéristiques de la pièce de montage :
- la pièce de montage présente une épaisseur sensiblement comprise entre 0,5 mm et 1 mm ;
- la pièce de montage comprend au moins un orifice de passage d'un moyen de fixation de l'ouvrant arrière sur le charnon mobile ;
- une fente débouche dans l'orifice de passage du moyen de fixation, ladite fente s'étendant jusqu'à un bord de la pièce, de sorte que la pièce de montage peut être retirée en desserrant le moyen de fixation et en faisant glisser la pièce de montage entre le charnon mobile et l'ouvrant arrière ;
- la pièce de montage comprend au moins un orifice de passage d'un moyen d'indexation de la position de l'ouvrant arrière par rapport au charnon mobile ;
- une fente débouche dans l'orifice de passage du moyen d'indexation, ladite fente s'étendant jusqu'à un bord de la pièce, de sorte que la pièce de montage peut être retirée en desserrant le moyen de fixation et en faisant glisser la pièce de montage entre le charnon mobile et l'ouvrant arrière ; et
- la pièce de montage comprend un épaulement s'étendant à partir d'un bord de la pièce de montage, ledit épaulement formant un moyen de préhension de la pièce de montage.

D'autres aspects et avantages de l'invention apparaîtront à la lecture de la description qui suit, donnée à titre d'exemple, et faite en référence aux dessins annexés, sur lesquels :
- la Fig. 1 est une représentation schématique en perspective d'une pièce de montage selon un premier mode de réalisation de l'invention,
- la Fig. 2 est une représentation schématique en perspective d'une pièce de montage selon un deuxième mode de réalisation de l'invention,
- la Fig. 3 est une représentation schématique en coupe d'un ouvrant arrière, partiellement représenté, monté sur un charnon mobile articulé à un charnon fixe,
- la Fig. 4 est une représentation schématique en perspective partielle vue de dessus de l'ouvrant arrière de la Fig. 3.

L'invention se rapporte au montage d'un ouvrant arrière 1 de véhicule automobile du type volet de hayon fixé à la partie supérieure de la caisse au niveau du plafond du véhicule automobile.

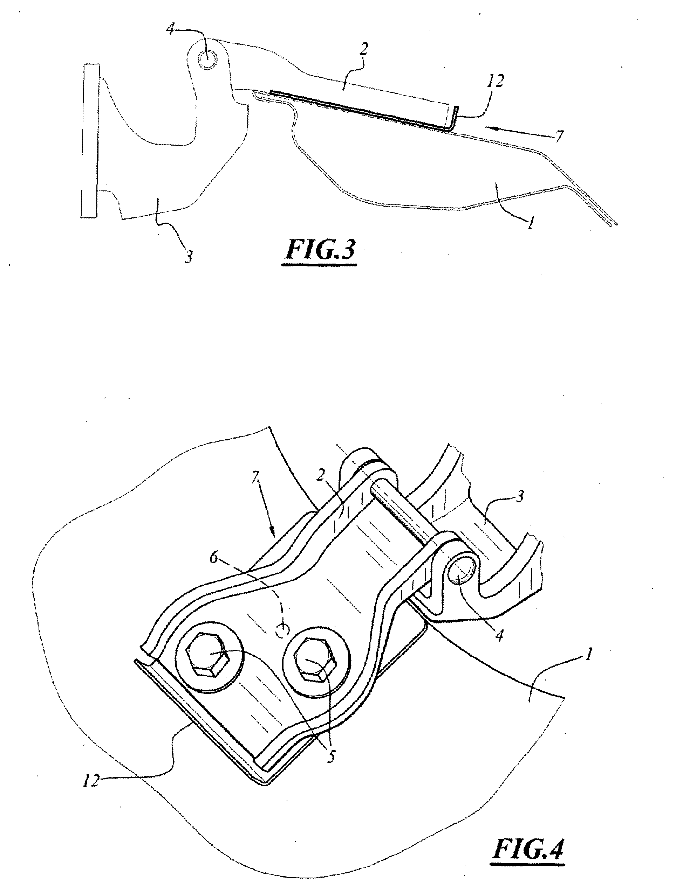

L'ouvrant arrière 1 est fixé à la caisse du véhicule automobile (non représentée) par l'intermédiaire d'un charnon mobile 2 articulé à un charnon fixe 3 fixé à la caisse du véhicule automobile. Le charnon mobile 2 est mobile en rotation autour d'un axe 4 de sorte que l'ouvrant arrière est mobile entre une position de fermeture (Fig. 3) et une position d'ouverture (non représentée). Selon une réalisation, la fixation de l'ouvrant arrière 1 est assurée par deux charnons fixes et deux charnons mobiles prévus de part et d'autre de l'ouvrant arrière 1. Le montage de l'ouvrant 1 étant identique pour les deux ensembles de charnons, la description de ce montage ne sera faite qu'en référence à l'un de ces deux ensembles charnon fixe/charnon mobile.

Dans le procédé de montage selon l'invention, un seul type d'ouvrant arrière 1 est prévu, c'est-à-dire que l'ouvrant arrière présente les mêmes caractéristiques d'un modèle de véhicule automobile à un autre.

La première étape du procédé de montage est la fixation de l'ouvrant arrière 1 au charnon mobile 2 par des moyens de fixation 5 du type vis, boulons et écrous ou similaire, comme représenté sur la figure 3. Ces moyens de fixation 5 traversent le charnon mobile 2 et sont vissés ou serrés au travers d'orifices de l'ouvrant arrière 1. Le charnon mobile 2 s'étend au dessus d'un bord de l'ouvrant arrière 2, comme représenté sur la Fig. 3.

L'ouvrant arrière 1, ou le charnon mobile 2, comprend un moyen d'indexation 6 formé par un picot introduit dans un orifice correspondant du charnon mobile 2, ou de l'ouvrant arrière 1. Le moyen d'indexation 6 permet de positionner correctement l'ouvrant arrière 1 par rapport au charnon mobile 2.

Lors du montage de l'ouvrant arrière 1, une pièce de montage 7 est interposée entre l'ouvrant arrière 1 et le charnon mobile 2, comme représenté sur les figures 3 et 4.

La pièce de montage 7 présente une épaisseur sensiblement égale à la différence de hauteur de fixation au charnon mobile 2 entre un ouvrant arrière motorisé et un ouvrant arrière non motorisé. En effet, dans le cas d'un ouvrant arrière motorisé, la hauteur de montage sur le charnon mobile 2 doit être plus importante que dans le cas d'un ouvrant arrière manuel du fait de la mise en contrainte plus importante produite par des moyens de motorisation prévus sur l'ouvrant arrière motorisé. Par hauteur plus importante, on entend qu'à hauteur constante du charnon mobile par rapport à la caisse du véhicule automobile, le bord de fixation d'un ouvrant arrière motorisé se trouvera plus haut que le bord de fixation d'un ouvrant arrière manuel par rapport à la caisse du véhicule automobile.

Selon une réalisation, la pièce de montage 7 présente une épaisseur sensiblement comprise entre 0,5 mm et 1 mm. La pièce de montage 7 est par exemple réalisée en acier.

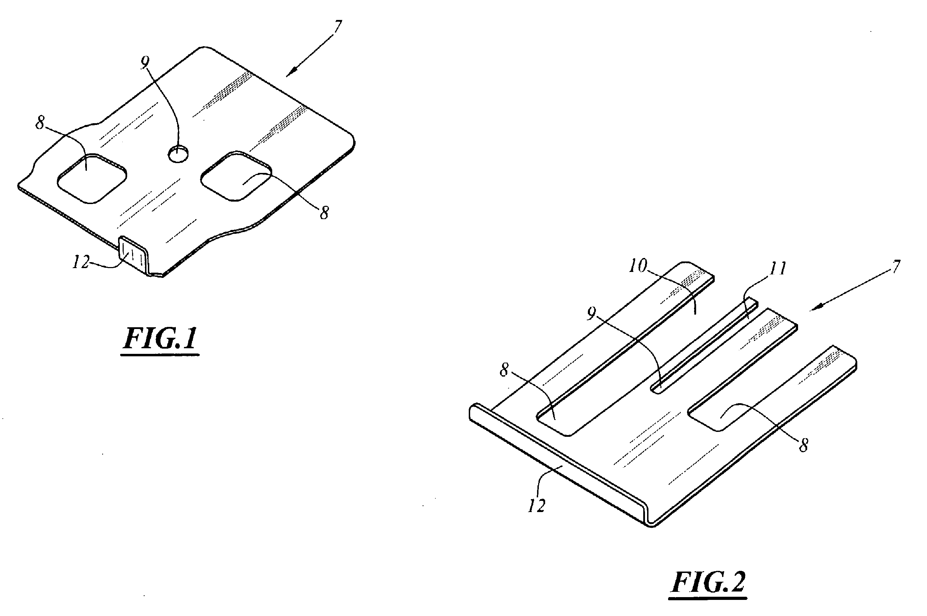

La pièce de montage 7 comprend un orifice de passage 8 pour chaque moyen de fixation 5 de l'ouvrant arrière 1 sur le charnon mobile 2, comme représenté sur la Fig. 1.

La pièce de montage 7 comprend également un orifice de passage 9 pour le moyen d'indexation 6, comme représenté sur la Fig. 1.

Selon un mode de réalisation représenté sur la Fig. 2, les orifices de passage 8 et 9 sont prolongés par des fentes 10 et 11 débouchant sur un bord de la pièce de montage 7. Les fentes 10 et 11 permettent de faire glisser la pièce de montage 7 entre l'ouvrant arrière 1 et le charnon mobile 2 lorsque les moyens de fixation 5 sont desserrés de sorte que la pièce de montage 7 peut être retirée aisément.

La pièce de montage 7 comprend en outre un épaulement 12 s'étendant à partir d'un bord de la pièce de montage 7 de sorte à former un moyen de préhension permettant de saisir la pièce de montage 7. Selon un mode de réalisation, l'épaulement 12 s'étend à partir d'une partie du bord de la pièce de montage 7 seulement, comme représenté sur la Fig. 1. Selon un autre mode de réalisation, l'épaulement 12 s'étend le long de tout le bord de la pièce de montage 7, comme représenté sur la Fig. 2.

Le charnon fixe 3 articulé au charnon mobile 2 est ensuite fixé à la caisse du véhicule automobile.

Une fois l'ouvrant arrière 1 fixé à la caisse, la caisse équipée de l'ouvrant arrière peut subir diverses opérations de traitement de la caisse et notamment une opération de ferrage.

Lorsque ces opérations ont été effectuées, le constructeur choisit si le véhicule automobile doit être équipé d'un ouvrant arrière 1 motorisé ou d'un ouvrant arrière 1 manuel.

Si le choix d'un ouvrant arrière 1 motorisé est fait, l'ouvrant arrière 1 est démonté (premier mode de réalisation de la pièce de montage 7) ou les moyens de fixation 5 sont desserrés (deuxième mode de réalisation de la pièce de montage 7) et la pièce de montage 7 est retirée.

L'ouvrant arrière 1 est équipé de moyens de motorisation (non représentés), tels qu'un moteur et des vérins motorisés et est remonté sur le charnon mobile 2. Le moyen d'indexation 6 permet de replacer correctement l'ouvrant arrière 1 par rapport au charnon mobile 2. La pièce de montage 7 ayant été retirée, l'ouvrant arrière 1 se trouvera à une hauteur plus importante que sa hauteur initiale, ce qui permet de rattraper l'écart de hauteur par rapport à un ouvrant manuel 1 du fait de la mise en contrainte plus importante produite par les moyens de motorisation.

Si le choix d'un ouvrant arrière 1 manuel est fait, la pièce de montage 7 est laissée en place et un simple système d'équilibreurs est monté sur l'ouvrant arrière 1.

Le procédé selon l'invention permet donc de retarder le choix entre un ouvrant arrière 1 motorisé et un ouvrant arrière 1 manuel et de ne travailler qu'avec un seul type d'ouvrant 1 jusqu'à ce que ce choix doive être effectué.

## Revendications

1. Procédé de montage d'un ouvrant arrière (1) d'un véhicule automobile, ledit ouvrant (1) présentant une face supérieure et une face inférieure, et étant monté de façon articulée à la caisse du véhicule automobile au moyen d'au moins un charnon fixe (3) fixé à la caisse du véhicule automobile et d'un charnon mobile (2) articulé au charnon fixe (3) et fixé à la face supérieure de l'ouvrant arrière (1), l'ouvrant arrière (1) étant mobile entre une position d'ouverture et une position de fermeture, le passage d'une position à l'autre étant susceptible d'être réalisé d'une façon manuelle ou d'une façon motorisée par le montage de moyens de motorisation sur ledit ouvrant arrière, l'ouvrant arrière (1) devant être fixé au charnon mobile (2) à une hauteur de fixation plus importante dans le cas d'un ouvrant (1) motorisé, ledit procédé étant **caractérisé en ce qu'**il prévoit les étapes suivantes :
- fixer l'ouvrant arrière (1) au charnon mobile (2), en interposant une pièce de montage (7) entre la face supérieure de l'ouvrant arrière (1) et le charnon mobile (2), la pièce de montage (7), ledit ouvrant (1) et ledit charnon mobile (2) se retrouvant en position sensiblement horizontale, et ladite pièce présentant une épaisseur sensiblement égale à la différence de hauteur de fixation au charnon mobile (2) entre un ouvrant (1) motorisé et un ouvrant (1) non motorisé,
- fixer le charnon fixe (3), articulé au charnon mobile (2), à la caisse du véhicule automobile,
- faire subir à la caisse au moins une opération de traitement,
- faire le choix d'équiper le véhicule automobile d'un ouvrant arrière (1) motorisé ou d'un ouvrant arrière (1) non motorisé,
- si le choix d'un ouvrant motorisé a été fait, retirer la pièce de montage (7) d'entre l'ouvrant arrière (1) et le charnon mobile (2) et monter les moyens de motorisation sur ledit ouvrant arrière (1),

2. Procédé selon la revendication 1, **caractérisé en ce que** l'opération de traitement est une opération de ferrage de la caisse.

3. Procédé de montage selon l'une quelconque des revendications 1 ou 2, **caractérisé en ce que** la pièce (7) présente une épaisseur sensiblement comprise entre 0,5 mm et 1 mm.

4. Procédé de montage selon la revendication 3, **caractérisée en ce que** la pièce (7) comprend au moins un orifice de passage (8) d'un moyen de fixation (5) de l'ouvrant arrière (1) sur le charnon mobile (2).

5. Procédé de montage selon la revendication 4, **caractérisé en ce qu'**une fente (10) débouche dans l'orifice de passage (8) du moyen de fixation (5), ladite fente (10) s'étendant jusqu'à un bord de la pièce (7), de sorte que la pièce de montage (7) peut être retirée en desserrant le moyen de fixation (5) et en faisant glisser la pièce de montage (7) entre le charnon mobile (2) et l'ouvrant arrière (1).

6. Procédé de montage selon l'une quelconque des revendications 1 à 5, **caractérisé en ce que** la pièce (7) comprend au moins un orifice de passage (9) d'un moyen d'indexation (6) de la position de l'ouvrant arrière (1) par rapport au charnon mobile (2).

7. Procédé de montage selon la revendication 6, **caractérisé en qu'**une fente (11) débouche dans l'orifice de passage (9) du moyen d'indexation (6), ladite fente (11) s'étendant jusqu'à un bord de la pièce (7), de sorte que la pièce de montage (7) peut être retirée en desserrant le moyen de fixation (5) et en faisant glisser la pièce de montage (7) entre le charnon mobile (2) et l'ouvrant arrière (1).

8. Procédé de montage selon l'une quelconque des revendications 1 à 7, **caractérisé en ce** la pièce (7) comprend un épaulement (12) s'étendant à partir d'un bord de la pièce de montage (7), ledit épaulement (12) formant un moyen de préhension de la pièce de montage (7).

## Claims

1. Method of installing a rear opening panel (1) of an automobile vehicle, said opening panel (1) having an upper face and a lower face, and being mounted in an articulated manner to the body of the automobile vehicle by means of at least one fixed hinge leaf (3) fixed to the body of the automobile vehicle and of a mobile hinge leaf (2) articulated to the fixed hinge leaf (3) and fixed to the upper face of the rear opening panel (1), the rear opening panel (1) being movable between an open position and a closed position, the passage from one position to the other being able to be realized manually or in a motorised manner by the mounting of motorisation means on the said rear opening panel, the rear opening panel (1) having to be fixed to the mobile hinge leaf (2) at a greater fixing height in the case of a motorised opening panel (1), the said method being **characterized in that** it provides the following steps:
- fixing the rear opening panel (1) to the mobile leaf hinge (2), interposing a mounting piece (7) between the upper face of the rear opening panel (1) and the mobile hinge leaf (2), the mounting piece (7), the said opening panel (1) and the said mobile hinge leaf (2) being situated in a substantially horizontal position, and the said piece having a thickness substantially equal to the difference in fixing height to the mobile hinge leaf (2) between a motorised opening panel (1) and a non-motorised opening panel (1),
- fixing the fixed hinge leaf (3), articulated to the mobile hinge leaf (2), on the body of the automobile vehicle,
- subjecting the body to at least one processing operation,
- choosing to equip the automobile vehicle with a motorised rear opening panel (1) or with a non-motorised rear opening panel (1),
- if the choice of a motorised opening panel has been made, withdrawing the mounting piece (7) from between the rear opening panel (1) and the mobile hinge leaf (2) and mounting the motorisation means on the said rear opening panel (1).

2. Method according to Claim 1, **characterized in that** the processing operation is an iron plating operation of the body.

3. Installation method according to any of Claims 1 or 2, **characterized in that** the piece (7) has a thickness substantially comprised between 0.5 mm and 1 mm.

4. Installation method according to Claim 3, **characterized in that** the piece (7) comprises at least one passage aperture (8) of a fixing means (5) of the rear opening panel (1) on the mobile hinge leaf (2).

5. Installation method according to Claim 4, **characterized in that** a slot (10) opens in the passage aperture (8) of the fixing means (5), the said slot (10) extending up to an edge of the piece (7), such that the mounting piece (7) can be withdrawn, loosening the fixing means (5) and causing the mounting piece (7) to slide between the mobile hinge leaf (2) and the rear opening panel (1).

6. Installation method according to any of Claims 1 to 5, **characterized in that** the piece (7) comprises at least one passage aperture (9) of an indexing means (6) of the position of the rear opening panel (1) with respect to the mobile hinge leaf (2).

7. Installation method according to Claim 6, **characterized in that** a slot (11) opens in the passage aperture (9) of the indexing means (6), the said slot (11) extending up to an edge of the piece (7), such that the mounting piece (7) can be withdrawn, loosening the fixing means (5) and causing the mounting piece (7) to slide between the mobile hinge leaf (2) and the rear opening panel (1).

8. Installation method according to any of Claims 1 to 7, **characterized in that** the piece (7) comprises a shoulder (12) extending from an edge of the mounting piece (7), said shoulder (12) forming a gripping means of the mounting piece (7).

## Patentansprüche

1. Verfahren zur Montage eines Hecktürflügels (1) eines Kraftfahrzeugs, wobei der Hecktürflügel (1) eine obere Seite und eine untere Seite aufweist und an dem Fahrzeugaufbau des Kraftfahrzeugs mittels mindestens eines stationären Scharniers (3), das an dem Fahrzeugaufbau des Kraftfahrzeugs befestigt ist, angelenkt ist, und mittels eines beweglichen Scharniers (2), das an dem stationären Scharnier (3) angelenkt und an der oberen Seite des Hecktürflügels (1) befestigt ist, wobei der Hecktürflügel (1) zwischen einer Öffnungs- und einer Schließposition beweglich ist, wobei der Übergang von einer Position zur anderen manuell oder motorisiert durch die Montage von Antriebsmitteln auf dem Hecktürflügel ausgeführt werden kann, wobei der Hecktürflügel (1) an dem beweglichen Scharnier (2) in einer Befestigungshöhe befestigt werden muss, die in dem Fall eines motorisierten Hecktürflügels (1) größer ist, wobei das Verfahren **dadurch gekennzeichnet ist, dass** es die folgenden Schritte aufweist:
- Befestigen des Hecktürflügels (1) an dem beweglichen Scharnier (2) unter Einfügen eines Montageteils (7) zwischen der oberen Seite des Hecktürflügels (1) und dem beweglichen Scharnier (2), wobei sich der Montageteil (7), der Hecktürflügel (1) und das bewegliche Scharnier (2) in im Wesentlichen horizontaler Position befinden und wobei der Teil eine Stärke aufweist, die im Wesentlichen gleich ist wie der Befestigungshöhenunterschied an dem beweglichen Scharnier (2) zwischen einem motorisierten Hecktürflügel (1) und einem nicht motorisierten Hecktürflügel (1),
- Befestigen des stationären Scharniers (3), das an dem beweglichen Scharnier (2) angelenkt ist, an dem Fahrzeugaufbau des Kraftfahrzeugs,
- Ausführen mindestens eines Bearbeitungsvorgangs an dem Fahrzeugaufbau,
- Auswählen des Ausstattens des Kraftfahrzeugs mit einem motorisierten Hecktürflügel (1) oder einem nicht motorisierten Hecktürflügel (1),
- wenn die Auswahl eines motorisierten Hecktürflügels erfolgte, Entfernen des Montageteils (7) zwischen dem Hecktürflügel (1) und dem beweglichen Scharnier (2) und Montage der Antriebsmittel auf dem Hecktürflügel (1).

2. Verfahren nach Anspruch 1, **dadurch gekennzeichnet, dass** der Bearbeitungsvorgang eine Beschlagarbeit am Fahrzeugaufbau ist.

3. Montageverfahren nach einem der Ansprüche 1 oder 2, **dadurch gekennzeichnet, dass** der Teil (7) eine Stärke aufweist, die im Wesentlichen zwischen 0,5 und 1 mm liegt.

4. Montageverfahren nach Anspruch 3, **dadurch gekennzeichnet, dass** der Teil (7) mindestens eine Durchgangsöffnung (8) für ein Befestigungsmittel (5) des Hecktürflügels (1) an dem beweglichen Scharnier (2) aufweist.

5. Montageverfahren nach Anspruch 4, **dadurch gekennzeichnet, dass** ein Schlitz (10) in die Durchgangsöffnung (8) des Befestigungsmittels (5) mündet, wobei sich der Schlitz (10) bis zum Rand des Teils (7) derart erstreckt, dass der Montageteil (7) abgenommen werden kann, indem das Befestigungsmittel (5) gelockert wird und indem man den Montageteil (7) zwischen dem beweglichen Scharnier (2) und dem Hecktürflügel (1) gleiten lässt.

6. Montageverfahren nach einem der Ansprüche 1 bis 5, **dadurch gekennzeichnet, dass** der Teil (7) mindestens eine Durchgangsöffnung (9) eines Positionierungsmittels (6) der Position des Hecktürflügels (1) in Bezug zu dem beweglichen Scharnier (2) aufweist.

7. Montageverfahren nach Anspruch 6, **dadurch gekennzeichnet, dass** ein Schlitz (11) in die Durchgangsöffnung (9) des Positionierungsmittels (6) mündet, wobei sich der Schlitz (11) bis zu einem Rand des Teils (7) derart erstreckt, dass der Montageteil (7) entfernt werden kann, indem man das Befestigungsmittel (5) lockert und den Montageteil (7) zwischen dem beweglichen Scharnier (2) und dem Hecktürflügel (1) gleiten lässt.

8. Montageverfahren nach einem der Ansprüche 1 bis 7, **dadurch gekennzeichnet, dass** der Teil (7) einen Ansatz (12) aufweist, der sich von einem Rand des Montageteils (7) erstreckt, wobei der Ansatz (12) ein Mittel zum Ergreifen des Montageteils (7) bildet.
